# EUROPÄISCHE PATENTSCHRIFT

(11) **EP 0 567 467 B1**
(45) Veröffentlichungstag und Bekanntmachung des Hinweises auf die Patenterteilung: **31.08.1994**
(21) Anmeldenummer: 92901134.4
(22) Anmeldetag: 18.12.1991
(51) Int. Cl.: F27B 7/08, C01F 5/06

(54) **DREHROHRWÄRMBEHANDLUNGSANLAGE, INSBESONDERE DREHROHROFEN, MIT INDIREKTER WÄRMEZU- ODER -ABFÜHRUNG**
ROTATING TUBE HEAT TREATMENT UNIT, IN PARTICULAR A ROTATING TUBULAR KILN, WITH INDIRECT HEAT FEED OR DISSIPATION
INSTALLATION DE TRAITEMENT THERMIQUE A TUBE ROTATIF, EN PARTICULIER FOUR TUBULAIRE ROTATIF, AVEC ADDUCTION ET DISSIPATION INDIRECTES DE LA CHALEUR

(30) Priorität: 14.01.1991 AT 55/91
(43) Veröffentlichungstag der Anmeldung: 03.11.1993
(73) Patentinhaber: WAAGNER-BIRO AKTIENGESELLSCHAFT, A-1221 Wien (AT); Lenzing Aktiengesellschaft, A-4860 Lenzing (AT)
(72) Erfinder: FREIBERGER, Norbert, A-8054 Graz (AT); GLASER, Wolfgang, A-8052 Graz (AT); WOLSCHNER, Bernd, A-4840 Vöcklabruck (AT); ZIKELI, Stefan, A-4844 Regau (AT)
(74) Vertreter: Wallner, Gerhard, Dipl.-Ing.
(86) Internationale Anmeldenummer: AT9100133
(87) Internationale Veröffentlichungsnummer: WO9212391

(56) Entgegenhaltungen:
- WO-A-84/00604
- DE-A- 2 110 865
- GB-A- 484 358
- US-A- 4 765 255

## Beschreibung

Die Erfindung betrifft eine Drehrohrwärmebehandlungsanlage, insbesondere Drehrohrofen, mit indirekter Wärmezu- oder -abführung zur thermischen Behandlung von Schüttgütern oder Schlacken unter Vermeidung des direkten Kontaktes mit den Heizmedium, vorzugsweise zur Spaltung von MgSO₃ in MgO und SO₂ , bei der ein Drehrohr und mit diesem durch eine Mitnahmekonstruktion und Verwendung von federnd gelagerten Stiften drehfest verbunden ein koaxiales mit einer Isolierung versehenes Hüllrohr in mindestens zwei Lagern gehalten ist und das Hüllrohr an seiner Außenseite den Antrieb sowie eventuelle Lauf- und Versteifungsringe trägt sowie an seinen Enden über eine Dichtungskonstruktion mit feststehenden Anschlüssen für das Wärmetauschfluid verbunden ist.

Derartige Behandlungsanlagen sind aus der DE-A1 37 41 112, PCT-WO 84/00604, DE-C1 36 32 548 und DE-C3 24 33 676 bekannt, haben jedoch den Nachteil, daß das Drehrohr mit dem Hüllrohr einen Bauteil bildet, der an seiner Innenseite durch das zu behandelnde Medium chemisch angegriffen wird und dadurch infolge der hohen Temperaturen eine geringe Zeitstandsfestigkeit aufweist, so daß der ganze Bauteil als Verschleißteil anzusehen ist. Bei den bekannten Konstruktionen sind die maschinentechnischen Einrichtungen wie Laufringe, Antriebskränze, etc. direkt am Drehrohr befestigt, so daß praktisch die ganze Anlage als Verschleißteil anzusehen ist.

Die GB-A 484358 offenbart einen Drehrohrofen mit gemauertem Innenrohr und Heizgaszügen zwischen dem Innen- und Außenrohr, wobei die Heizgaszüge durch Stützwände getrennt sind, die im Außenmantel an besonderen Steinen 3, 4, 5 abgestützt bzw. geführt sind. Zur Anpressung der Stützwände an das Innenrohr sind Kolben in Form einer Anpressvorrichtung vorgesehen, damit der Reibschluß zwischen Schuh und Innenrohr auch bei unterschiedlichen Temperaturen des Innen- und Außenrohres erhalten bleibt und auch Sprengkräfte infolge unterschiedlicher Differenzwärmedehnungen abgebaut werden können. Die Kolben selbst sind nicht als Mitnahmevorrichtung ausgebildet.

Die Erfindung hat es sich zur Aufgabe gestellt, das Drehrohr als austauschbaren Verschleißteil von allem unnötigen Beiwerk zu befreien und einem mantelartigen, getrennten zweiten Bauteil zuzuordnen, der nicht mit den im Drehrohr behandelten Medium in Berührung kommt, und so chemisch nicht angegriffen wird.

Die Erfindung ist dadurch gekennzeichnet, daß das Hüllrohr mit dem Drehrohr durch am Umfang des Hüllrohres verteilt angeordnete als radiale Auflager, insbesondere Zwischenauflager, des Drehrohres ausgebildete, in radialer Richtung federnd gelagerte Stifte, insbesondere Keramik stifte, verbunden ist, die als lösbare Mitnahmekonstruktion ausgebildet sind und eine wärmeelastische Relativbewegung des Hüllrohres zum Drehrohr sowie eine Ersetzung des schadhaften Drehrohres ermöglichen. Insbesondere ist das Drehrohr als Verschleißteil ausgebildet und weist das Hüllrohr an seiner Innenseite eine an sich bekannte Wärmeisolierung, wie z.B. Leichtisolierung, auf und sind vorzugsweise die Anschlüsse für das Wärmetauscherfluid in horizontaler Richtung teilbar ausgebildet. In vorteilhafter Weise sind die Stifte in Richtung der Drehachse des Drehrohres verlaufende Nuten am Drehrohr gelagert.

Ein wesentlicher Verwendungszweck der erfindungsgemäßen Behandlungsanlage wird bei der Spaltung des Magnesiummonosulfits gesehen, die bei etwa 800° C erfolgt, wobei im durch das Drehrohr strömenden gasförmigen Medium ca. 20 % SO₂ enthalten ist, wodurch das Medium also sehr stark korrosiv ist.

Eine weitere Verwendung ist bei der Kühlung von Aluminiumkrätze zu sehen, wobei die Krätze praktisch brennend anfällt, und die Verbrennung durch Sauerstoffmangel und gleichzeitige Kühlung möglichst rasch zum Erliegen gebracht wird, so daß das entstehende Granulat noch Aluminium enthält, welches rückgewinnbar ist. Auch in diesem Fall entstehen, insbesondere durch die Salzzugaben beim Aluminiumschmelzprozeß, korrosive Dämpfe, die mit dem flüssigen Aluminium die Innenseite des Drehrohres korrosiv beanspruchen, so daß auch hier mit einem Ersatz des Drehrohres innerhalb der Betriebslebensdauer der Anlage zu rechnen ist.

Die Erfindung ist in der angeschlossenen Figur beispielsweise und schematisch dargestellt.

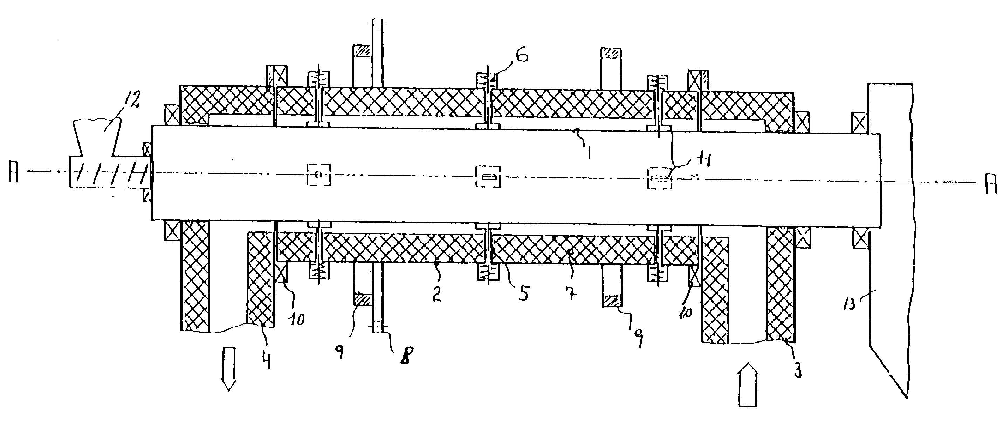

Die Figur zeigt eine indirekt beheizte Ofenkonstruktion mit einem drehbaren Innenrohr 1, in welches das zu behandelnde Schüttgut unter Luftabschluß über die Eingabeeinrichtung 12 und über die Drehbewegung des Drehrohres 1 einer weiteren Behandlungseinrichtung 13 zugeführt wird, wobei im Falle der Magnesiumsulfitspaltung in der Behandlungseinrichtung 13 eine Trennung in SO₂ und MgO erfolgt, und einem damit verbundenen Hüllrohr 2. Das im wesentlichen gerade Drehrohr 1 hat an seiner Außenseite aufgeschweißte Bleche mit Nuten 11, in welche auf Federn 6 gelagerte Stifte 5 eingreifen, die radial angeordnet sind und in dem drehbaren Hüllrohr 2, an welchem der Antrieb 8 der Drehrohrofenanlage und auch etwaige Versteifungsringe 9 eingreifen, gelagert sind. Die Stifte fungieren nicht nur als Mitnehmer für das Drehrohr 1, sondern unterstützen das Drehrohr und lagern dieses am relativ kalten Hüllrohr 2, so daß das Drehrohr 1 eine geringere Durchbiegung aufweist und daher mit geringerer Wandstärke ausgebildet ist. Dies bedeutet letzten Endes eine Verringerung des Konstruktionsgewichtes und auch eine Verbesserung des Wärmeüberganges. Die drehbaren Bauteile (Innenrohr 1 und Hüllrohr 2) sind in feststehenden Anschlüssen 3 und gelagert, durch welche das wärmetauschende Fluid, Heizgas oder Kühlwasser dem Raum zwischen dem Drehrohr 1 und dem Hüllrohr 2 zu- bzw. abgeführt wird. Zwischen dem Hüllrohr 2 und dem feststehenden Anschluß sind Dichtungskonstruktionen 10 vorgesehen, die den Austritt von wärmetauschenden Fluid und den Eintritt von Luft verhindern. Zur Vermeidung von Wärmeverlusten ist das Hüllrohr mit einer Wärmeisolierung, insbesondere an seiner Innenseite mit einer elastischen, temperaturbeständigen Leichtisolierung 7, bedeckt. Zur Erleichterung des Austausches des Drehrohres 1 sind die Anschlüsse 3 und 4 in einer Ebene, in der die Drehachse A - A′ des Drehrohres liegt, teilbar ausgebildet, so daß nach einer Abnahme des Lagerdeckels das schadhafte Drehrohr 1 ausgefädelt und durch ein neues, im wesentlichen glattes Drehrohr problemlos ersetzt werden kann.

Dadurch, daß das Drehrohr 1 durch die Stifte 5 in kürzeren Abständen aufgelagert ist, kann es mit geringerer Wandstärke ausgebildet werden, wodurch das Gesamtgewicht der Anlage und auch die Antriebsleistung gesenkt wird. Das Hüllrohr 2 weist gegenüber dem Drehrohr 1 ein größeres Widerstandsmoment auf und ist infolge seiner Innenisolierung und Außenkühlung durch die Umgebungsluft auch weniger thermisch belastet, so daß die Krafteinleitung durch die Stifte 5, herrührend von der Auflagekraft des Drehrohres 1 praktisch keine Vergrößerung des Konstruktionsgewichtes bewirkt.

## Patentansprüche

1. Drehrohrwärmbehandlungsanlage, insbesondere Drehrohrofen, mit indirekter Wärmezu- oder -abführung, zur thermischen Behandlung von Schüttgütern oder Schlacken unter Vermeidung des direkten Kontaktes mit dem Heizmedium, vorzugsweise zur Spaltung von MgSO₃ in MgO und SO₂, bei der ein Drehrohr und mit diesem durch eine Mitnahmekonstruktion unter Verwendung von federnd gelagerten Stiften drehfest verbunden ein koaxiales mit einer Isolierung versehenes Hüllrohr in mindestens zwei Lagern gehalten ist und das Hüllrohr an seiner Außenseite den Antrieb sowie eventuelle Lauf- und Versteifungsringe trägt sowie an seinen Enden über eine Dichtungskonstruktion mit feststehenden Anschlüssen für das Wärmetauschfluid verbunden ist, dadurch gekennzeichnet, daß das Hüllrohr (2) mit dem Drehrohr (1) durch am Umfang des Hüllrohres (2) verteilt angeordnete als radiale Auflager, insbesondere Zwischenlager, des Drehrohres ausgebildete in radialer Richtung federnd gelagerte Stifte (5), insbesondere Keramikstifte, verbunden ist, die als lösbare Mitnahmekonstruktion ausgebildet sind und eine wärmeelastische Relativbewegung des Hüllrohres zum Drehrohr sowie eine Ersetzung des schadhaften Drehrohres ermöglichen.

2. Drehrohrwärmebehandlungsanlage nach Anspruch 1, dadurch gekennzeichnet, daß das Drehrohr (1) als Verschleißteil ausgebildet ist und das Hüllrohr (2) an seiner Innen- seite eine an sich bekannte Wärmeisolierung, insbesondere Leichtisolierung (7), aufweist.

3. Drehrohrwärmebehandlungsanlage nach Anspruch 1, dadurch gekennzeichnet, daß die Anschlüsse (3, 4) für das Wärmetauschfluid in horizontaler Richtung teilbar ausgebildet sind.

4. Drehrohrwärmebehandlungsanlage nach Anspruch 1, dadurch gekennzeichnet, daß die Stifte (5) in in Richtung der Drehachse des Drehrohres (1) verlaufenden Nuten (11) am Drehrohr (1) gelagert sind.

## Claims

1. Rotating tube heat treatment unit, in particular a rotating tube kiln, with indirect heat feed or dissipation, for the heat treatment of bulk materials or slag whilst avoiding direct contact with the heating medium, preferably for the decomposition of MgSO₃ into MgO and SO₂, in which a rotating tube and, fastened to it in such a way as to prevent rotation by means of a carrier arrangement using spring-mounted pins, a coaxial jacket tube having insulation, is mounted on at least two bearings and the jacket tube carries on its external surface the drive and any runner rings and stiffening rings and is connected at its ends through a sealing unit to fixed-position connections for the heat exchanger fluid characterized in that the jacket tube (2) is fastened to the rotating tube (1) by means of pins (5), in particular ceramic pins, spring-mounted in the radial direction and arranged distributed around the circumference of the jacket tube (2) and taking the form of radial supports, in particular intermediate bearings, of the rotating tube, and which are constructed as a removable carrier construction and permit a heat-elastic movement of the jacket tube relative to the rotating tube and replacement of the defective rotating tube.

2. Rotating tube heat treatment unit in accordance with claim 1, characterized in that the rotating tube (1) is constructed as a wear part and the jacket tube (2) has a known thermal insulation, in particular lightweight insulation (7).

3. Rotating tube heat treatment unit in accordance with claim 1, characterized in that the connections (3, 4) for the heat exchanger fluid are constructed to be separable in the horizontal direction.

4. Rotating tube heat treatment unit in accordance with claim 1, characterized in that the pins (5) are mounted in grooves (11) on the rotating tube (1) running in the direction of the axis of rotation of the rotating tube (1).

## Revendications

1. Installation de traitement thermique à tube rotatif, en particulier four tubulaire rotatif, avec adduction et dissipation indirectes de la chaleur, pour le traitement thermique de produits en vrac ou de scories en évitant le contact direct avec le milieu chauffant, de préférence pour la dissociation de MgSO₃ en MgO et SO₂ dans laquelle un tube rotatif et un tube de gainage coaxial pourvu d'une isolation, relié immobile en rotation à celui-ci par une construction d'entraînement en utilisant des tiges montées à ressort, sont disposés dans au moins deux paliers, et le tube de gainage supporte à son côté extérieur le dispositif d'entraînement ainsi que d'éventuels anneaux de glissement et de renforcement, et est relié à ses extrémités par une construction d'étanchéité à des raccordements fixes pour le fluide d'échange thermique, caractérisée en ce que le tube de gainage (2) est relié au tube rotatif (1) par des tiges (5), notamment des tiges en céramique, montées à ressort suivant la direction radiale, réparties sur le pourtour du tube de gainage (2) et réalisées sous forme d'appuis radiaux, notamment d'appuis intermédiaires, du tube rotatif, et qui sont réalisées sous forme de construction d'entraînement amovible et permettent un mouvement relatif thermo-élastique du tube de gainage au tube rotatif ainsi qu'un remplacement du tube rotatif endommagé.

2. Installation de traitement thermique à tube rotatif selon la revendication 1, caractérisée en ce que le tube rotatif (1) est réalisé sous forme de pièce d'usure, et que le tube de gainage (2) présente à son côté intérieur une isolation thermique connue, notamment une isolation légère (7).

3. Installation de traitement thermique à tube rotatif selon la revendication 1, caractérisée en ce que les raccordements (3, 4) pour le fluide d'échange thermique sont réalisés de façon divisible suivant la direction horizontale.

4. Installation de traitement thermique à tube rotatif selon la revendication 1, caractérisée en ce que les tiges (5) sont logées dans des rainures (11) au tube rotatif (1) s'étendant suivant la direction de l'axe de rotation du tube rotatif (1).
